# EUROPEAN PATENT APPLICATION

(11) **EP 2 525 530 A1**
(43) Date of publication of application: **21.11.2012**
(21) Application number: 10854321.6
(22) Date of filing: 14.09.2010
(51) Int. Cl.: H04L 12/28, H04L 12/66

(54) **MEDIA SERVER AND METHOD FOR AUDIO/VIDEO TRANSMISSION**

(30) Priority: 09.07.2010 CN 201010225271
(71) Applicant: ZTE Corporation, Shenzhen, Guangdong 518057 (CN)
(72) Inventor: LV, Yong, Shenzhen Guangdong 518057 (CN)
(74) Representative: Waddington, Richard
(86) International application number: PCT/CN2010/076914
(87) International publication number: WO 2012/003662

(57) **Abstract**

The present invention discloses a media server, which is connected with content networks, and linked with an information terminal via Wireless Fidelity (WiFi). The media server comprises an information receiving and transmitting controller as well as a Web server; wherein, the information receiving and transmitting controller is used to receive contents sent by the content networks, and to convert audio and video data of the contents into a format of the Real-Time Transport Protocol/Real-Time Transport Control Protocol (RTP/RTCP) encapsulation, then to transmit the converted data to the information terminal, additionally, to form a content directory in a HTML format according to the contents; the Web server is used to publish the content directory in the HTML format, which is formed by the information receiving and transmitting controller, so as to be accessed by the information terminal. The present invention also discloses a method for transmitting audio and video. The application of the present invention can facilitate users accessing the contents provided by various content networks.

## Description

### Technical Field

The present invention relates to the triple play technology, and especially, to a media server and a method for transmitting audio and video.

### Background of the Related Art

At present, there are a plurality of content networks, such as a broadcasting and television network as represented by the cable television technology and the radio broadcasting technology, a telecommunication network as represented by the internet protocol television (IPTV) technology, and the Internet. Wherein, the radio broadcasting technology comprises a terrestrial digital TV broadcasting standard such as DVB-T (DVB, Digital Video Broadcasting) and ISDB-T (ISDB, Integrated Service Digital Broadcasting), as well as a mobile digital TV broadcasting standard such as DVB-H and China Mobile Multimedia Broadcasting (CMMB). The content networks can provide users with a variety of contents; therefore the content networks are favored by the majority of users.

The above content networks are based on different technologies, for example the transmission of DVB-T in the broadcasting and television network mainly adopts a transport stream (TS) standard, while audio and video contents on the Internet is transmitted primarily through a Hypertext Transfer Protocol progressive download (HTTP Progressive Download) technology. For this reason, information terminals appear differentiations. For example, the technology of broadcasting and television networks gets good support on a TV set, and IPTV is supported mainly by a set-top box, while the Internet is well supported in a mobile phone and PC. This causes that an ordinary user is subject to a limitation of the equipment in a family environment so as not to access to various contents "seamlessly". For example, when viewing content downloaded from the broadcasting and television network by means of a TV set in a living room, a user needs to process an e-mail on a desktop computer in a study; since the desktop computer does not support the broadcasting and television network, the user only interrupts the previous television viewing rather than process the mail while watching TV.

### Summary of the Invention

In view of this, the main purpose of the present invention is to provide a media server and a method for transmitting audio and video, so as to facilitate users accessing contents provided by various content networks.

In order to achieve the aforementioned purpose, the technical scheme of the present invention is implemented hereinafter.

A media server, is connected with content networks, and linked with an information terminal via Wireless Fidelity (WiFi). The media server comprises an information receiving and transmitting controller as well as a Web server; wherein,
the information receiving and transmitting controller is used to receive contents sent by the content networks, and convert audio and video data of the contents into a format of the Real-Time Transport Protocol/Real-Time Transport Control Protocol (RTP/RTCP) encapsulation, then transmit the converted data to the information terminal, additionally, to form a content directory in a HTML format according to the contents;
the Web server is used to publish the content directory in the HTML format, which is formed by the information receiving and transmitting controller, so as to be accessed by the information terminal.

Preferably , the content directory further comprises playback parameters as well as transmission parameters of audio and video data.

Preferably, the Web server is further used to receive a control command for selecting the content which is sent by the information terminal after the information terminal accesses the content directory, and to forward the control command to the information receiving and transmitting controller; the information receiving and transmitting controller is further used to convert the audio and video data of the corresponding content into the RTP/RTCP encapsulation format according to the control command for selecting the content, then transmit the converted data to the information terminal.

Preferably, the information receiving and transmitting controller is further used: to convert graphic data of the contents into a HTML format, and to publish the graphic data in the HTML format to the Web server to be accessed by the information terminal.

Preferably, the media server transmits the audio and video data for which the format conversion is performed by means of broadcast and multicast.

Preferably, the media server further comprises a streaming media server, which is used to transmit the audio and video data for which the format conversion is performed to the information terminal by means of unicast.

Preferably, the content network comprises: any one or two or more of the Internet, a broadcasting and television network and an Internet protocol television network.

A method for transmitting audio and video, wherein a media server is configured to be connected with content networks and to be linked with an information terminal via WiFi; and the media server comprises an information receiving and transmitting controller as well as a Web server. The method comprises:
the information receiving and transmitting controller receives contents sent by the content networks, converts audio and video data of the contents into a RTP/RTCP encapsulation format, then transmits the converted data to the information terminal, in addition, forms a content directory in a HTML format according to the contents and publishes the content directory to the Web server to be accessed by the information terminal.

Preferably, the content directory further comprises playback parameters as well as transmission parameters of audio and video data.

Preferably, after the Web server publishes the content directory, the method further comprises:
the information terminal accesses the content directory on the Web server, and sends a control command for selecting the content according to the content directory;
the Web server forwards the received control command for selecting the content to the information receiving and transmitting controller;
the information receiving and transmitting controller converts the audio and video data of the corresponding content into the RTP/RTCP encapsulation format according to the control command for selecting the content, then transmits the converted data to the information terminal.

Preferably, after the information receiving and transmitting controller receives the contents, the method further comprises: the information receiving and transmitting controller converts graphic data of the contents into a HTML format, and publishes the graphic data in the HTML format to the Web server to be accessed by the information terminal.

Preferably, the media server transmits the audio and video data for which the format conversion is performed by means of broadcast and multicast.

Preferably, the media server further comprises a streaming media server, and the process of converting the audio and video data into the RTP/RTCP encapsulation format to transmit to the information terminal, specifically is: the media server transmitting the audio and video data for which the format conversion is performed to the information terminal by means of unicast.

Preferably, the content network comprises: any one or two or more of the Internet, a broadcasting and television network and an Internet protocol television network.

It can be seen form the aforementioned technical scheme that the media server converts all the audio and video data sent from the different content networks into the format supported by the information terminal, namely the RTP/RTCP encapsulation format, then transmits the converted data to the information terminal, so that users can seamlessly access the contents provided by the various content networks.

### Brief Description of Drawings

FIG. 1 is a diagram of a communication between a media server and an information terminal in an embodiment of the present invention;
FIG. 2 is a diagram of transmitting audio and video in a family application environment in an embodiment of the present invention.

### Preferred Embodiments of the Present Invention

With the popularity of the wireless local area network, more and more families is configured with wireless fidelity (WiFi) access points, and a growing number of information terminals support the WiFi access technology, therefore WiFi will be a standard configuration of almost all information terminals in the near future. The most obvious example is that most of previous TV sets do not support the WiFi access technology, however more and more future TV sets will support the WiFi access technology with the rise of the network television (such as Google TV and Microsoft TV). The information terminal supporting the WiFi access technology, usually supports the browser technology and the streaming media technology based on the Real-time Transport Protocol/Real-time Transport Control Protocol (RTP/RTCP), as well as the corresponding audio and video playback technology.

Based on the above description as well as the problem existed in the background technology, the basic idea of the present invention is: to design a media server, which can support a variety of content networking technology and receive contents from the content networks, aggregate the contents and convert the contents into a format, which ordinary information terminals can access, to be accessed by the information terminals via WiFi. Therefore, most of the information terminals do not need to be improved to receive and display the contents, thus facilitating a user using an appropriate information terminal nearby to access the contents in any location within the scope of a family.

The technical scheme of the present invention will be illustrated in detail in combination with accompany drawings hereinafter.

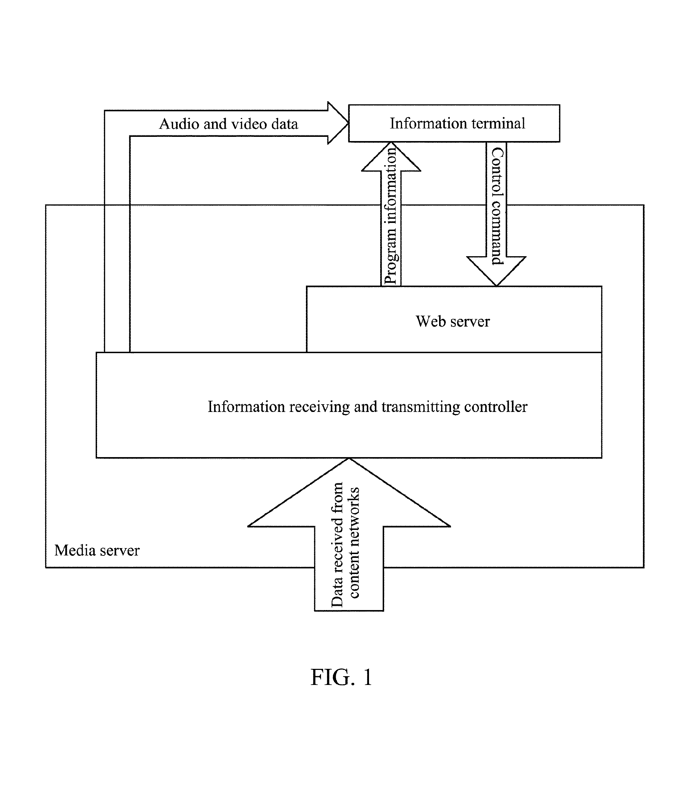

As shown in FIG. 1, a media server of the present invention comprises an information receiving and transmitting controller and a Web server; wherein,
the information receiving and transmitting controller is used to receive contents sent by the content networks, and to convert audio and video data of the contents into a RTP/RTCP encapsulation format, then to transmit the converted data to the information terminal, additionally, to form a content directory in a HTML format according to the contents;
the Web server is used to publish the content directory in the HTML format, which is formed by the information receiving and transmitting controller, so as to be accessed by the information terminal.

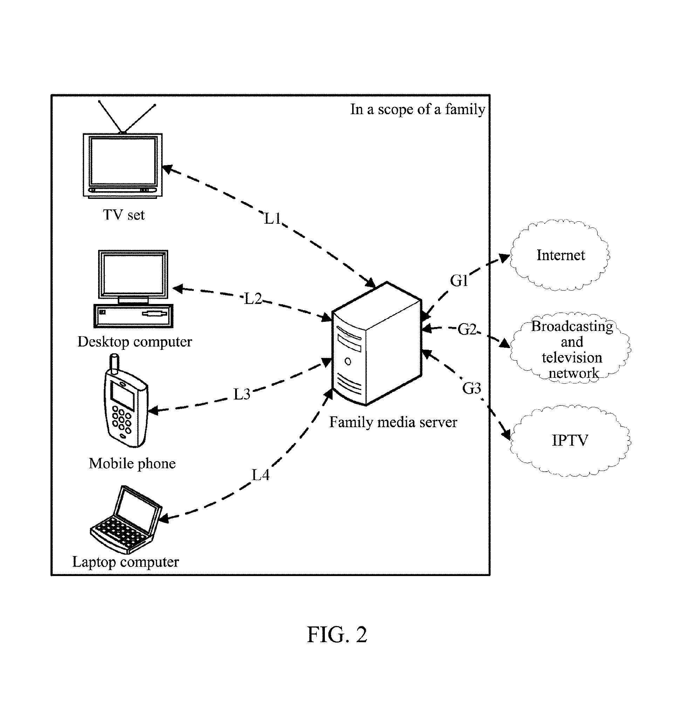

Wherein, as shown in FIG. 2, the content networks comprise the Internet, a broadcasting and television network, an IPTV network and so on. The media server is connected with the content networks, for example, the media server is connected with the Internet by means of High Speed Downlink Packet Access (HSDPA); is connected with the IPTV network via network cables; and can receive DVB-T high definition terrestrial digital broadcast signals. In addition, the media server is linked with an information terminal via WiFi. The information terminal comprises: a TV set, a desktop computer, a mobile phone, a laptop computer and so on.

Correspondingly, the present invention also provides a method for transmitting audio and video. In the method, it is configured that the media server is connected with the content networks and linked with an information terminal via WiFi; the media server comprises an information receiving and transmitting controller and a Web server; and the method comprises:
the information receiving and transmitting controller receives contents sent by the content networks, converts audio and video data of the contents into a RTP/RTCP encapsulation format, then transmits the converted data to the information terminal, in addition, forms a content directory in a HTML format according to the contents and publishes the content directory to the Web server to be accessed by the information terminal.

Wherein, how to convert the audio and video data of the contents into a RTP/RTCP encapsulation format is an existing technology, and will not be discussed here.

Wherein, the content directory further comprises playback parameters as well as transmission parameters of the audio and video data for the information terminal to acquire the playback parameters and transmission parameters by accessing the content directory, so that the information terminal can correctly receive and play back the audio and video data in accordance with the playback parameters and transmission parameters.

After the Web server publishes the content directory, the method further comprises:
the information terminal accesses the content directory on the Web server, and sends a control command for selecting the content according to the content directory;
the Web server forwards the received control command for selecting the content to the information receiving and transmitting controller;
the information receiving and transmitting controller converts the audio and video data of the corresponding content into the RTP/RTCP encapsulation format according to the control command for selecting the content, then transmits the converted data to the information terminal.

After the information receiving and transmitting controller receives the contents, the method further comprises: the information receiving and transmitting controller converts graphic data of the contents into a HTML format, and publishes the graphic data in the HTML format to the Web server to be accessed by the information terminal.

The media server transmits the audio and video data for which the format conversion is performed by means of broadcast and multicast.

The media server further comprises a streaming media server, which transmits the audio and video data for which the format conversion is performed to the information terminal by means of unicast.

The technical scheme of the present invention will be illustrated in further detail with an embodiment in a family application environment hereinafter.

With an example of forwarding the audio and video data in the CMMB signals, the method for transmitting audio and video data with the scope of a family comprises:
In step 1, the media server parses the received CMMB signals to obtain program information (EPG/ESG), and converts the program information into a HTML page, which is published to the Web server embedded in the media server.

On the one hand, the HTML page contains the program information (EPG/ESG) of each channel, on the other hand, the HTML page includes the playback parameters of the audio and video data of these channels, such as an audio format, a video format, an audio and video sampling rate, time stamp information, and so on; the playback parameters are usually described by means of the session description protocol (SDP) file. In addition, the audio and video data is converted into a RTP/RTCP encapsulation format to be transmitted via IP, therefore the SDP file further comprises the transmission parameters such as IP, User Datagram Protocol (UDP), RTP, RTCP besides the description of playback parameters. The transmission parameters are usually configured by the media server, for example, one channel program of CCTV1 can be transmitted with a broadcast or multicast address parameter, to make a plurality of information terminals within the family receive the program; and then another channel program of CCTV5 is transmitted with a unicast address parameter, to enable the information terminals to receive the audio and video data of the program only when the information terminal is connected to the media server in accordance with the standard of the streaming media server. In addition, the information terminal can obtain the SDP files by accessing the Web server embedded in the media server.

In step 2, the media server utilizes the IP multicast or broadcasting technology to transmit the audio and video data of each program in the CMMB signals to the information terminal via WiFi.

Wherein, the transmission parameters adopted by the audio and video data transmission of each program are the same as the transmission information published on the HTML page in the step 1, so as to ensure that the information terminals can receive the corresponding data of the program in accordance with the transmission parameters described by the SDP file.

In general, especially in the case of a pluralityof data sources, for example, the media server not only receives CMMB signals, but also receives signals from the other signal sources of IPTV and so on, if the WiFi bandwidth is not enough to transfer the audio and video data of all programs by means of broadcast or multicast at the same time, a method is that: a streaming media server is embedded in the media server, and the audio and video data is transmitted by means of unicast; another method is: to make a plurality of channel programs share a set of transmission addresses, for example, the CCTV1 and CCTV2 share an IP broadcast or multicast address, however, in fact only one channel program is transmitted with the IP broadcast or multicast address. Specifically, when the user sending a command for selecting CCTV2 via through the Web server, if the data transmitted by the media server currently is the audio and video data of CCTV1, the transmission of the audio and video data of CCTV1 is stopped, and the audio and video data of CCTV2 is transmitted instead. Both the methods can save the WiFi bandwidth and can be flexibly used according to the scenes.

The method for transmitting audio and video within a scope of a family further comprises:
In step 3, the information terminal acquires the program information in the HTML by accessing the Web server embedded in the media server, and demonstrates the program information via its own browser. After the user chooses to play a channel program such as CCTV1, the information terminal sends a control command for selecting CCTV1 to the Web server, as shown in FIG. 1.

In step 4, after the media server acquiring the control command for selecting CCTV1 via the embedded Web server, if the audio and video data of CCTV1 is not transmitted currently, after converted into an RTP/RTCP encapsulation format, the audio and video data of CCTV1 in the CMMB signals is transmitted via WiFi to the information terminal in accordance with the transmission parameters described in the SDP file of CCTV1 which is published on the Web server.

In step 5, the information terminal receives the audio and video data of CCTV1 in accordance with the transmission parameters described in the SDP file of CCTV1 after acquiring the SDP file of CCTV1 from the Web server, and plays back the CCTV1 program in accordance with the playback parameters described in the SDP file.

After the information terminal sends the control command for selecting CCTV1, the media server can receive the audio and video data of CCTV1 from the external different content networks (such as a digital television network, an IPTV network or the Internet), and transmit the audio and video data for which the format conversion is performed to the information terminal, so that the information terminals can play back the audio and video data without knowing the original source.

It can be seen from the technical scheme of the present invention that the present invention takes maximum advantage of the technologies supported by all the existing information terminals, including the support for the WiFi access technology, browser technology, streaming media technology based on RTP/RTCP as well as audio and video playback technology, therefore there is no need to improve the information terminal, and the cost is relatively lower; in addition, the present invention can facilitate the information terminals accessing the contents of each content network seamlessly within a scope of a family.

Additionally, since medium/low-end mobile phones only support a quarter common intermediate format (QCIF) generally, or a video of a quarter video graphics array (QVGA) resolution, a transcoding function is increased in the home media server, that is: the audio and video data received from the content networks is converted into different video formats which are applicable to the different information terminals, and then is sent to the corresponding information terminals. In this way, the different information terminals can share the same audio and video data (while in the different video formats), so that the service function of "three screens in one" is achieved.

The above description is only the preferred embodiments of the present invention, and is not intended to limit the protection scope of the present invention.

## Claims

1. A media server, wherein, the media server is connected with content networks, and linked with an information terminal via Wireless Fidelity (WiFi), said media server comprises an information receiving and transmitting controller as well as a Web server; wherein,
the information receiving and transmitting controller is used to receive contents sent by the content networks, and to convert audio and video data of the contents into a format of a Real-Time Transport Protocol/Real-Time Transport Control Protocol (RTP/RTCP) encapsulation, then to transmit the converted data to the information terminal, additionally, to form a content directory in a HTML format according to the contents;
the Web server is used to publish the content directory in the HTML format, which is formed by the information receiving and transmitting controller, so as to be accessed by the information terminal.

2. The media server of claim 1, wherein, the content directory further comprises playback parameters as well as transmission parameters of audio and video data.

3. The media server of claim 1, wherein, the Web server is further used to receive a control command for selecting the content which is sent by the information terminal after the information terminal accesses the content directory, and to forward the control command to the information receiving and transmitting controller; the information receiving and transmitting controller is further used to convert the audio and video data of the corresponding content into the RTP/RTCP encapsulation format according to the control command for selecting the content, then to transmit the converted data to the information terminal.

4. The media server of claim 1, wherein, the information receiving and transmitting controller is further used: to convert graphic data of the contents into a HTML format, and to publish the graphic data in the HTML format to the Web server to be accessed by the information terminal.

5. The media server of claim 1, wherein, the media server transmits the audio and video data, for which the format conversion is performed, by means of broadcast and multicast.

6. The media server of claim 1, wherein, the media server further comprises a streaming media server which is used to transmit the audio and video data, for which the format conversion is performed, to the information terminal by means of unicast.

7. The media server of claim 1, wherein, the content network comprises: any one or two or more of Internet, a broadcasting and television network and an Internet protocol television network.

8. A method for transmitting audio and video, wherein, a media server is configured to be connected with content networks and to be linked with an information terminal via WiFi; the media server comprises an information receiving and transmitting controller as well as a Web server, and the method comprises that:
the information receiving and transmitting controller receives contents sent by the content networks, converts audio and video data of the contents into an RTP/RTCP encapsulation format, then transmits the converted data to the information terminal, in addition, forms a content directory in a HTML format according to the contents and publishes the content directory to the Web server to be accessed by the information terminal.

9. The method for transmitting audio and video of claim 8, wherein, the content directory further comprises playback parameters as well as transmission parameters of audio and video data.

10. The method for transmitting audio and video of claim 8, wherein, after the Web server publishes the content directory, the method further comprises that:
the information terminal accesses the content directory on the Web server, and sends a control command for selecting the content according to the content directory;
the Web server forwards the received control command for selecting the content to the information receiving and transmitting controller;
the information receiving and transmitting controller converts the audio and video data of the corresponding content into the RTP/RTCP encapsulation format according to the control command for selecting the content, then transmits the converted data to the information terminal.

11. The method for transmitting audio and video of claim 8, wherein, after the information receiving and transmitting controller receives the contents, the method further comprises that:
the information receiving and transmitting controller converts graphic data of the contents into a HTML format, and publishes the graphic data in the HTML format to the Web server to be accessed by the information terminal.

12. The method for transmitting audio and video of claim 8, wherein, the media server transmits the audio and video data for which the format conversion is performed by means of broadcast and multicast.

13. The method for transmitting audio and video of claim 8, wherein, the media server further comprises a streaming media server, and a process for converting the audio and video data into the RTP/RTCP encapsulation format to transmit to the information terminal specifically is: the media server transmitting the audio and video data for which the format conversion is performed to the information terminal by means of unicast.

14. The method for transmitting audio and video of claim 8, wherein, the content network comprises: any one or two or more of Internet, a broadcasting and television network and an Internet protocol television network.
